# EUROPÄISCHE PATENTSCHRIFT

(11) **EP 2 584 676 B1**
(45) Veröffentlichungstag und Bekanntmachung des Hinweises auf die Patenterteilung: **25.12.2019**
(21) Anmeldenummer: 12188569.3
(22) Anmeldetag: 15.10.2012
(51) Int. Cl.: H02K 11/40, H01R 39/39, H02K 11/00, H01R 39/24

(54) **Ableitungseinrichtung**
Discharge device
Dispositif de déviation

(30) Priorität: 19.10.2011 DE 202011106900 U
(43) Veröffentlichungstag der Anmeldung: 24.04.2013
(73) Patentinhaber: Schunk Transit Systems GmbH, 35435 Wettenberg (DE)
(72) Erfinder: Zilch, Peter, 35428 Langgöns (DE)
(74) Vertreter: advotec.

(56) Entgegenhaltungen:
- EP-A1- 0 981 039
- US-A- 3 886 386
- US-A- 4 277 708
- US-A- 4 378 138

## Beschreibung

Die Erfindung betrifft eine Ableitungseinrichtung gemäß Anspruch 1.

Derartige Ableitungseinrichtungen können zur Ableitung elektrostatischer Aufladung aufgrund von Reibungseffekten oder auch äußerer Einwirkungen, wie beispielsweise Blitzeinschlag, eingesetzt werden. Darüber hinaus können derartige Ableitungseinrichtungen auch zur Ableitung elektrischer Ladung von Motorwellen von Elektromotoren, die insbesondere an Drehstrommotoren in Folge eines welleninduzierten elektrischen Stroms entstehen können, eingesetzt werden. Im letzteren Fall dient die Ableitung des "Wellenstroms" insbesondere zur Vermeidung elektrolytischer Korrosion in den Lagern der Motoren.

Zur Ausführung von Ableitungseinrichtungen ist es bekannt, eine bürstenförmige Anordnung vorzusehen, bei der eine häufig unter Verwendung von dünnen Kupferdrähten hergestellte Erdungsbürste in Schleifkontakt mit einem Kontaktumfang der Welle angeordnet wird.

Bei der bekannten, beispielsweise in der DE 100 13 222 A1 beschriebenen Erdungsbürste mit metallischen Borsten stellt sich jedoch ein erhöhter Verschleiß im Schleifkontakt mit dem Kontaktpartner oder der Welle, aus der die Ladung abgeleitet werden soll, ein.

US-A-4378138 offenbart eine Ableitungseinrichtung nach dem Oberbegriff des Anspruchs 1.

Der vorliegenden Erfindung liegt daher die Aufgabe zugrunde, eine Ableitungseinrichtung der eingangs genannten Art vorzuschlagen, die eine erhöhte Verschleißfestigkeit aufweist.

Diese Aufgabe wird durch eine Ableitungseinrichtung mit den Merkmalen des Anspruchs 1 gelöst.

Erfindungsgemäß ist die Ableitungseinrichtung mit einer Hebelwippe versehen, die an einem Kontaktende einen Bürstenkopf aufweist, der in Anlage mit dem Kontaktpartner, also beispielsweise der Welle, aus der elektrostatische Ladung abgeleitet werden soll, gebracht werden kann. Dabei ermöglicht die Ausbildung als Hebelwippe eine genaue Dosierung der Kontaktkraft, mit der der Bürstenkopf gegen den Kontaktpartner anliegt. Somit kann die Kontaktkraft genau auf die gerade benötigte Größe eingestellt werden, ohne dass es bereits schon aufgrund einer überhöhten Kontaktkraft zu einem erhöhten Verschleiß kommen kann. Darüber hinaus ist der Bürstenkopf erfindungsgemäß mit einer Faseranordnung versehen, die Kontaktfasern aufweist, welche als Kohlenstofffasern ausgebildet sind. Kohlenstofffasern weisen neben einer hohen Leitfähigkeit zur effektiven Ableitung elektrostatischer Aufladung eine hohe Verschleißfestigkeit auf, sodass auch aufgrund der besonderen Materialauswahl für die Kontaktfasern ein vergleichsweise geringerer Verschleiß der Bürste ermöglicht wird.

Insgesamt ermöglicht somit die erfindungsgemäße Ableiteinrichtung aufgrund der Ausbildung als Hebelwippe und der Bestückung des Bürstenkopfes der Hebelwippe mit einer Faseranordnung aus Kohlenstofffasern einen reduzierten Verschleiß und damit eine erhöhte Wartungsfreundlichkeit gegenüber der bekannten Erdungsbürste.

In einer besonders bevorzugten Ausführungsform weist der Faserträger eine Klemmbackenanordnung auf, die die Faseranordnung unter Vorspannung zwischen sich aufnimmt, wobei die Kohlenstofffasern der Faseranordnung mit ihren Faserenden einen Kontaktüberstand gegenüber der Klemmbackenanordnung ausbilden.

Mit dieser bevorzugten Ausführungsform kann auf besondere Mittel, die einen Verbund zwischen den einzelnen Kontaktfasern der Faseranordnung herstellen, verzichtet werden. Vielmehr wird ein unmittelbarer leitfähiger Verbund zwischen den einzelnen Kontaktfasern der Faseranordnung allein aufgrund des Berührungskontakts zwischen den Kontaktfasern hergestellt. Für den notwendigen Kontaktdruck zur Ausbildung des Berührungskontakts sorgen dabei die Klemmbacken der Klemmbackenanordnung, die die Faseranordnung unter Vorspannung zwischen sich aufnehmen. Darüber hinaus ermöglichen die Klemmbacken der Klemmbackenanordnung gleichzeitig eine Verbindung der Faseranordnung mit dem Kontaktende der Hebelwippe, ohne dass hierzu weitere Elemente notwendig wären.

Alternativ kann der leitende Verbund zwischen den einzelnen Kontaktfasern der Kontaktfaseranordnung auch über eine zwischen den Fasern ausgebildete leitende Matrix, die vorzugsweise aus Kohlenstoff ausgebildet ist, hergestellt werden.

Als besonders vorteilhaft erweist es sich, wenn zumindest der Faserträger aus einem kohlenstofffaserverstärkten Verbundkörper hergestellt ist, wobei es sich bei dem Verbundkörper um einen kohlenstofffaserverstärkten Kohlenstoff-Verbundkörper (CFC-Verbundkörper) oder auch um einen kohlenstofffaserverstärkten Kunststoff-Verbundkörper (CFK-Verbundkörper) handeln kann. In jedem Fall ermöglicht die Verwendung eines kohlenstofffaserverstärkten Verbundkörpers für den Faserträger eine Reduzierung der Masse der Ableiteinrichtung, sodass insbesondere bei schnell drehenden Wellen die auftretenden Massenkräfte bzw. Fliehkräfte gering gehalten werden können und nur entsprechend geringe Kontaktkräfte aufgebracht werden müssen.

Insbesondere betreffend die vorstehend bereits erwähnte Reduktion von Massenkräften erweist es sich als vorteilhaft, wenn nicht nur der Faserträger sondern darüber hinaus auch die Hebelwippe aus einem kohlenstofffaserverstärkten Verbundkörper hergestellt sind.

Eine besondere Vereinfachung im Gesamtaufbau der Ableitungseinrichtung sowie eine Reduktion der zum Aufbau der Ableitungseinrichtung notwendigen Teileanzahl ergibt sich, wenn der Faserträger als integraler Bestandteil der Hebelwippe das Kontaktende der Hebelwippe ausbildet.

Eine noch weitergehende Vereinfachung im Aufbau der Ableitungseinrichtung sowie darüber hinaus eine weitestgehende Reduzierung von Übertragungs- bzw. Übergangswiderständen innerhalb der Ableitungseinrichtung lässt sich erreichen, wenn die Faseranordnung des Bürstenkopfs durch Kohlenstofffasern des kohlenstofffaserverstärkten Verbundkörpers des Faserträgers gebildet ist, die mit Faserenden aus einer Körperkante des Verbundkörpers hervorragen.

Mit dieser besonders vorteilhaften Ausführungsform wird allein über die Kohlenstofffasern ein elektrisch leitender Kontakt zwischen einer Welle, an deren Kontaktumfang die Kontaktenden der Kohlenstofffasern anliegen, und dem Anschlussende der Hebelwippe möglich.

Nachfolgend werden bevorzugte Ausführungsformen der Erfindung anhand der Zeichnung näher erläutert. Es zeigen:
- **Fig. 1**: eine mit einer Hebelwippe ausgebildete Ableitungseinrichtung in Schleifkontakt zum Kontaktumfang einer Welle in isometrischer Darstellung;
- **Fig. 2**: eine vergrößerte Darstellung der in **Fig. 1** dargestellten Kontaktanordnung;
- **Fig. 3**: eine Querschnittsdarstellung der Hebelwippe längs dem Schnittlinienverlauf III-III in **Fig. 2**;
- **Fig. 4**: eine Draufsicht der in **Fig. 2** dargestellten Hebelwippe;
- **Fig. 5**: eine Schnittdarstellung durch einen Bürstenkopf der in **Fig. 2** dargestellten Hebelwippe längs dem Schnittlinienverlauf V-V;
- **Fig. 6**: eine in der Ansicht **Fig. 4** entsprechende Darstellung eines Kontaktendes der Hebelwippe in einer weiteren Ausführungsform der Hebelwippe;
- **Fig. 7**: eine Seitenansicht gemäß Ansicht VII der in **Fig. 6** dargestellten Hebelwippe.

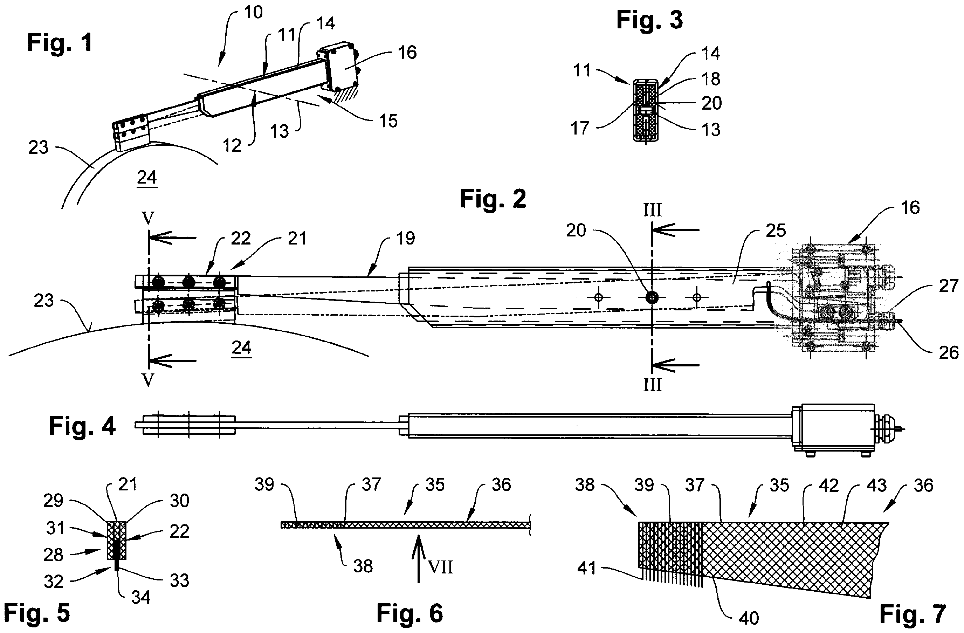

**Fig. 1** zeigt eine Ableitungseinrichtung 10, die an einem Kragarm 11 ausgebildet ein Wippenlager 12 aufweist, dass eine Lagerachse 13 aufweist, die in einem Kragarmgehäuse 14 angeordnet ist. Das Kragarmgehäuse 14 ist im vorliegenden Fall aus einem Vierkantrohr gebildet und weist an seinem Befestigungsende 15 ein Anschlussgehäuse 16 auf, das mit einer hier nicht näher dargestellten Gestelleinrichtung ortsfest verbunden ist.

Wie sich aus einer Zusammenschau der **Fig. 1** und **2** ergibt, weist die Ableitungseinrichtung 10 eine Hebelwippe 19 auf, die auf der Lagerachse 13 sandwichartig zwischen zwei Lagerwangen 17, 18 des Kragarms 11 gelagert ist. Hierzu ist die Hebelwippe 19 mit einer hier hülsenförmig ausgebildeten Lageraufnahme 20 zwischen den Lagerwangen 17, 18 aufgenommen. Wie durch die gestrichelte Darstellung der Hebelwippe 19 in ihrer ausgelenkten Konfiguration in den **Fig. 1** und **2** dargestellt, kann die Hebelwippe 19 um die Lagerachse 13 eine Schwenkbewegung ausführen, derart, dass ein an einem Kontaktende 21 der Hebelwippe 19 ausgebildeter Bürstenkopf 22 in radialer Richtung relativ zu einem Kontaktumfang 23 einer Welle 24 verstellbar ist.

Das dem Kontaktende 21 gegenüberliegende Ende der Hebelwippe 19 ist als Anschlussende 25 ausgebildet, das unmittelbar angrenzend an das Anschlussgehäuse 16 des Kragarms 11 ausgebildet ist und über ein Erdungskabel 26 mit einem Anschlusskontakt 27 des Anschlussgehäuses 16 verbunden ist.

Der am Kontaktende der Hebelwippe 19 ausgebildete Bürstenkopf 22 weist einen Faserträger 28 mit einer zwei Klemmbacken 29, 30 umfassenden Klemmbackenanordnung 31 auf, die zwischen den Klemmbacken 29, 30 eine Faseranordnung 32 mit einem aus einer Vielzahl von Kohlenstofffasern 33 gebildeten Faserverbund aufweist. Wie insbesondere aus **Fig. 5** deutlich wird, dient die Klemmbackenanordnung 31 des Faserträgers 28 sowohl zur Herstellung eines Faserverbunds zwischen den einzelnen Kohlenstofffasern 33 der Faseranordnung 32 als auch zur Verbindung der Faseranordnung 32 mit dem Kontaktende 21 der Hebelwippe 19.

Bei dem in den **Fig. 1 bis 5** dargestellten Ausführungsbeispiel sind sowohl die Klemmbacken 29, 30 der Klemmbackenanordnung 31 des Faserträgers 28 als auch die Hebelwippe 19 aus einem kohlenstofffaserverstärkten Verbundkörper, also beispielsweise aus einem CFK-Körper hergestellt, der aus Kohlenstofffasern besteht, die in eine Kunstharzmatrix eingebettet sind, wobei zur Ausbildung eines elektrisch leitenden Kontakts in einem Kontaktbereich zwischen den Klemmbacken 29, 30 und den Kohlenstofffasern 33 der Faseranordnung 32 sowie in einem Kontaktbereich zwischen den Klemmbacken 29, 30 und dem Kontaktende 21 der Hebelwippe 19 die Kohlenstofffasern der Klemmbacken 29, 30 und der Hebelwippe 19 durch eine geeignete Oberflächenbearbeitung der Klemmbacken 29, 30 und des Kontaktendes 21 freigelegt sind, sodass sowohl ein unmittelbarer Kontakt zwischen den Kohlenstofffasern der Klemmbacken 29, 30 und den Kohlenstofffasern der Hebelwippe 19 als auch zwischen den Kohlenstofffasern 33 der Faseranordnung 32 und den Kohlenstofffasern der Klemmbacken 29, 30 besteht.

Alternativ besteht auch die Möglichkeit, die Klemmbacken 29, 30 sowie die Hebelwippe 19 aus einem CFC-Verbundkörper auszubilden, der die Kohlenstofffasern in einer Kohlenstoffmatrix aufweist, die beispielsweise durch Karbonisierung des in einer Kunstharzmatrix enthaltenen Kohlenstoffs erzeugt werden kann.

Die Ausbildung der in **Fig. 2** dargestellten Erdungsleitung 26, die sich vom Anschlussende 25 der Hebelwippe 19 zum Anschlusskontakt 27 des Anschlussgehäuses 16 erstreckt, kann beispielsweise aus einer Kontaktlitze gebildet sein, die über die Ausbildung eines sogenannten Stampfkontakts mit dem Anschlussende 25 der Hebelwippe verbunden sein kann. Dabei ist ein dem Anschlussende 25 zugewandtes Kontaktende der Erdungsleitung 26 in eine Anschlussbohrung im Anschlussende 25 eingesetzt und über eine im Wesentlichen Kohlenstoffpartikel enthaltene, in die Anschlussbohrung eingebrachte Stampfmasse mit dem Anschlussende 25 der Hebelwippe elektrisch leitend und mechanisch haltend verbunden.

Der notwendige Kontaktdruck zur Anlage von Faserenden 34 der Kohlenstofffasern 33 gegen den Kontaktumfang 23 der Welle 24 kann durch eine geeignete hier nicht näher dargestellte und beispielsweise als Feder ausgebildete Vorspanneinrichtung erzeugt werden.

In den **Fig. 6** und **7** ist in einer weiteren Ausführungsform eine Ableiteinrichtung 35 dargestellt, die mit Ausnahme einer Hebelwippe 36 übereinstimmend mit der in den **Fig. 1 bis 4** dargestellten Ableitungseinrichtung 10 ausgebildet ist, wobei die Hebelwippe 36 ein Kontaktende 37 aufweist, an dem zur Ausbildung eines Bürstenkopfs 38 ein Faserträger 39 integral ausgebildet ist, mit einer Faseranordnung 40, die eine Vielzahl von Kohlenstoffasern 41 aufweist, welche zur Ausbildung eines Verbunds mit dem Kontaktende 37 der Hebelwippe dadurch verbunden sind, dass sie in eine mit der Hebelwippe 36 gemeinsame Trägermatrix aus Kunstharz eingebettet sind.

Bei der in den **Fig. 6** und **7** dargestellten Ausführungsform der Hebelwippe weist die Hebelwippe 36 im Bereich des Kontaktendes 37 demnach sowohl Kohlenstofffasern 42, 43 der Hebelwippe 36 als auch die Kohlenstofffasern 41 zur Ausbildung der Faseranordnung 40 des Bürstenkopfs 38 auf.

## Patentansprüche

1. Ableitungseinrichtung (10, 35) zur Ableitung elektrostatischer Ladung von einer Welle (24) mit einem an einem Kontaktende (21, 37) einer Hebelwippe (19, 36) angeordneten Bürstenkopf (22, 38) zur Anlage an der Welle und einer an einem Anschlussende (25) der Hebelwippe angeordneten Anschlusseinrichtung zum Anschluss einer Erdungsleitung (26) sowie einer zwischen dem Kontaktende und dem Anschlussende ausgebildeten Lageraufnahme (20) zur Verbindung der Hebelwippe mit einem Wippenlager (12), wobei der Bürstenkopf einen Faserträger (28, 39) mit einer Faseranordnung (32, 40) aus einer Vielzahl von gleichgerichteten Kontaktfasern aufweist, die mit Kontaktenden zur Anlage gegen eine Kontaktoberfläche der Welle versehen sind, wobei die Kontaktfasern als Kohlenstofffasern (33, 41) ausgebildet sind,
**dadurch gekennzeichnet,**
**dass** der Faserträger (28) eine Klemmbackenanordnung (31) aufweist, die die Faseranordnung (32) unter Vorspannung zwischen Klemmbacken (29, 30) aufnimmt, wobei die Kohlenstofffasern (33) der Faseranordnung mit ihren Faserenden (34) einen Kontaktüberstand gegenüber der Klemmbackenanordnung ausbilden.

2. Ableitungseinrichtung nach Anspruch 1,
**dadurch gekennzeichnet,**
**dass** die Faseranordnung (32) einen durch die Vorspannung der Klemmbackenanordnung (31) erzeugten Faserverbund der Kohlenstofffasern (33) aufweist.

3. Ableitungseinrichtung nach einem der vorangehenden Ansprüche,
**dadurch gekennzeichnet,**
**dass** der Faserträger (28, 39) zumindest einen kohlenstofffaserverstärkten Verbundkörper aufweist.

4. Ableitungseinrichtung nach einem der vorangehenden Ansprüche,
**dadurch gekennzeichnet,**
**dass** der Faserträger (28, 39) und die Hebelwippe (36) aus einem kohlenstofffaserverstärkten Verbundkörper hergestellt sind.

5. Ableitungseinrichtung nach Anspruch 4,
**dadurch gekennzeichnet,**
**dass** der Faserträger (39) als integraler Bestandteil der Hebelwippe (36) durch das Kontaktende (37) der Hebelwippe ausgebildet ist.

6. Ableitungseinrichtung nach einem der Ansprüche 3 bis 5,
**dadurch gekennzeichnet,**
**dass** die Faseranordnung (40) aus Kohlenstofffasern (41) des kohlenstofffaserverstärkten Verbundkörpers des Faserträgers (39) gebildet ist, die mit Faserenden aus einer Körperkante des Verbundkörpers hervorragen.

## Claims

1. A discharge device (10, 35) for discharging electrostatic charges from a shaft (24), the discharge device comprising a brush head (22, 38) which is disposed on a contact end (21, 37) of a lever rocker (19, 36) and which serves to come into contact with the shaft, and a connection device which is disposed on a connection end (25) of the lever rocker and which serves to connect to a grounding conductor (26), and a bearing seat (20) which is formed between the contact end and the connection end and which serves to connect the lever rocker to a rocker bearing (12), the brush head having a fiber support (28, 39) comprising a fiber assembly (32, 40) composed of a plurality of unidirectional contact fibers which are provided with contact ends serving to come into contact with a contact surface of the shaft, the contact fibers being carbon fibers (33, 41),
**characterized in that**
the fiber support (28) has a clamping jaw assembly (31) which holds the fiber assembly (32) under preload between clamping jaws (29, 30), the fiber ends (34) of the carbon fibers (33) of the fiber assembly forming a contact protrusion protruding from the clamping jaw assembly.

2. The discharge device according to claim 1,
**characterized in that**
the fiber assembly (32) has a fiber composite of the carbon fibers (33) which is produced by the preload of the clamping jaw arrangement (31).

3. The discharge device according to any one of the preceding claims,
**characterized in that**
the fiber support (28, 39) has at least one carbon-fiber-reinforced composite body.

4. The discharge device according to any one of the preceding claims,
**characterized in that**
the fiber support (28, 39) and the lever rocker (36) are made of a carbon-fiber-reinforced composite body.

5. The discharge device according to claim 4,
**characterized in that**
the fiber support (39) is an integral part of the lever rocker (36) through the contact end (37) of the lever rocker.

6. The discharge device according to any one of claims 3 to 5,
**characterized in that**
the fiber assembly (40) is formed by carbon fibers (41) of the carbon-fiber-reinforced composite body of the fiber support (39) whose fiber ends protrude from a body edge of the composite body.

## Revendications

1. Dispositif de décharge (10, 35) de charges électrostatiques d'un arbre (24), le dispositif de décharge comprenant une tête de balai (22, 38) qui est disposée sur une extrémité de contact (21, 37) d'une bascule de levier (19, 36) et qui sert à venir en contact avec l'arbre et un moyen de raccordement qui est disposé sur une extrémité de raccordement de la bascule de levier et qui sert pour le raccordement d'un conducteur de terre (26) et un logement de palier (20) qui est formé entre l'extrémité de contact et l'extrémité de raccordement et qui sert à relier la bascule de levier avec un palier de bascule (12), la tête de balai ayant un support de fibres (28, 39) comprenant un ensemble de fibres (32, 40) composé d'une pluralité de fibres de contact unidirectionnels qui sont munis d'extrémités de contact servant à venir en contact avec une surface de contact de l'arbre, les fibres de contact étant des fibres de carbone (33, 41),
**caractérisé en ce que**
le support de fibres (28) a un ensemble (31) de mâchoires de serrage qui reçoit l'ensemble de fibres (32) sous précontrainte entre des mâchoires de serrage (29, 30), les extrémités (34) des fibres de carbone (33) de l'ensemble de fibres formant une saillie de contact au-delà de l'ensemble de mâchoires de serrage.

2. Dispositif de décharge selon la revendication 1,
**caractérisé en ce que**
l'ensemble de fibres (32) a un composite des fibres de carbone (33) produit par la précontrainte de l'ensemble (31) de mâchoires de serrage.

3. Dispositif de décharge selon l'une quelconque des revendications précédentes,
**caractérisé en ce que**
le support de fibres (28, 39) a au moins un corps composite renforcé de fibres de carbone.

4. Dispositif de décharge selon l'une quelconque des revendications précédentes,
**caractérisé en ce que**
le support de fibres (28, 39) et la bascule de levier (36) sont fabriqués à partir d'un corps composite renforcé de fibres de carbone.

5. Dispositif de décharge selon la revendication 4,
**caractérisé en ce que**
le support de fibres (39) est une partie intégrale de la bascule de levier (36) par l'intermédiaire de l'extrémité de contact (37) de la bascule de levier.

6. Dispositif de décharge selon l'une quelconque des revendications 3 à 5,
**caractérisé en ce que**
l'ensemble de fibres (40) est formé par des fibres de carbone (41) du corps composite renforcé de fibres de carbone du support de fibres (39) dont des extrémités des fibres font saillie à partir d'un bord du corps composite.
